# EUROPEAN PATENT APPLICATION

(11) **EP 2 937 830 A1**
(43) Date of publication of application: **28.10.2015**
(21) Application number: 15163089.4
(22) Date of filing: 10.04.2015
(51) Int. Cl.: G06Q 30/02, G09F 3/20

(54) **ELECTRONIC SHELF LABEL TAG AND ELECTRONIC SHELF LABEL SYSTEM**

(30) Priority: 25.04.2014 KR 20140050312; 02.03.2015 KR 20150028970
(71) Applicant: Samsung Electro-Mechanics Co., Ltd., Gyeonggi-do (KR)
(72) Inventor: Cho, Han Jin, Gyeonggi-do (KR); Ryu, Jong Gi, Gyeonggi-do (KR); Yoon, Dong Sik, Gyeonggi-do (KR)
(74) Representative: Grünecker Patent- und Rechtsanwälte PartG mbB

(57) **Abstract**

An electronic shelf label system may include at least one power supply generating electrical energy using a solar cell and storing the generated electrical energy therein, and at least one electronic shelf label tag driven by power supplied by the at least one power supply, receiving product information from an electronic shelf label gateway, and displaying the product information.

## Description

### CROSS-REFERENCE TO RELATED APPLICATION

This application claims the priority and benefit of Korean Patent Application Nos. 10-2014-0050312 filed on April 25, 2014 and 10-2015-0028970 filed on March 2, 2015, with the Korean Intellectual Property Office, the disclosures of which are incorporated herein by reference.

### BACKGROUND

The present disclosure relates to an electronic shelf label tag and an electronic shelf label system.

An electronic shelf label (ESL) system may include electronic shelf label gateways (for example, gateways) and a plurality of electronic shelf label tags (for example, electronic tags) connected to the electronic shelf label gateways by a wireless network.

Here, the electronic shelf label tags necessarily consume a predetermined amount of current in order to ensure maintenance of communications with the electronic shelf label gateways, or the like. To this end, the electronic shelf label tags may use coin batteries as power sources, and such coin batteries need to be replaced after being used for a predetermined period (for example, over a period of several years).

Research into and development of an electronic shelf label tag that does not include a battery have been conducted in view of a reduction in operating costs, environmental-friendliness, and increases in electronic shelf label tag lifespans.

For example, a method of using solar cells as the power sources of electronic shelf label tags has been suggested. However, it is somewhat difficult to mass-produce electronic shelf label tags using solar cells as power sources, due to the relatively high cost of solar cells in addition to the fact that a size of the solar cell that may be installed in the electronic shelf label tag is limited due to the limited size of electronic shelf label tags, such that there are limitations in the ability of such solar panels to supply sufficient amounts of power for executing communications, or the like.

An information display system, an information display apparatus, and an electronic shelf label are disclosed in the following Related Art Document (Patent Document 1).

### [Related Art Document]

(Patent Document 1) Japanese Patent Laid-Open Publication No. 2011-045430 (published on March 10, 2011)

### SUMMARY

An aspect of the present disclosure may provide an electronic shelf label tag able to be efficiently implemented without using a battery.

According to an aspect of the present disclosure, an electronic shelf label system may include at least one power supply and at least one electronic shelf label tag.

The at least one power supply may generate electrical energy using a solar cell and store the generated electrical energy, and may include the solar cell converting solar energy into the electrical energy, a capacitor storing the electrical energy generated by the solar cell, and a direct current (DC) to DC converter converting the electrical energy stored in the capacitor into a form usable in the at least one electronic shelf label tag and providing the converted electrical energy.

The at least one electronic shelf label tag may be driven by power supplied by the at least one power supply, receive product information from an electronic shelf label gateway, and display the product information.

The at least one electronic shelf label tag may include a circuit unit performing communications with the electronic shelf label gateway and processing the product information received from the electronic shelf label gateway, and a display unit displaying the product information depending on a control of the circuit unit.

The at least one electronic shelf label tag may be installed on a rail of a shelf for displaying products, and the rail may have power lines installed thereon in order for the at least one power supply to supply the power to the at least one electronic shelf label tag.

The at least one power supply and the at least one electronic shelf label tag may include antennas for wireless charging, respectively, and the at least one power supply may wirelessly supply the power to the at least one electronic shelf label tag.

According to another aspect of the present disclosure, an electronic shelf label tag may include a circuit unit, and a display unit.

The circuit unit may perform communications with an electronic shelf label gateway and may process product information received from the electronic shelf label gateway.

The display unit may display the product information depending on a control of the circuit unit.

The electronic shelf label tag may be driven by power supplied by an external power supply.

### BRIEF DESCRIPTION OF DRAWINGS

The above and other aspects, features and other advantages of the present disclosure will be more clearly understood from the following detailed description taken in conjunction with the accompanying drawings, in which:
FIG. 1 is a block diagram of an electronic shelf label system according to an exemplary embodiment of the present disclosure;
FIG. 2 is a block diagram of an electronic shelf label tag according to the exemplary embodiment of the present disclosure;
FIG. 3 is a block diagram of a power supply included in the electronic shelf label system according to the exemplary embodiment of the present disclosure;
FIG. 4 is a view illustrating an example in which the electronic shelf label tag and the power supply are installed on a rail of a shelf according to the exemplary embodiment of the present disclosure;
FIG. 5 is a view illustrating an implementation of a rear surface of the electronic shelf label tag illustrated in FIG. 4;
FIG. 6 is a block diagram of a system in which a circuit unit of the electronic shelf label tag and the power supply are implemented to be integrated with each other according to the exemplary embodiment of the present disclosure;
FIG. 7 is a view illustrating an example in which the system illustrated in FIG. 6 is installed on the rail of the shelf;
FIG. 8 is a view illustrating an implementation of a rear surface of a display panel illustrated in FIG. 7; and
FIG. 9 is a view illustrating an implementation of connection between the display panel illustrated in FIG. 7 and communications lines of the shelf.

### DETAILED DESCRIPTION

Exemplary embodiments of the present disclosure will now be described in detail with reference to the accompanying drawings.

The disclosure may, however, be embodied in many different forms and should not be construed as being limited to the embodiments set forth herein. Rather, these embodiments are provided so that this disclosure will be thorough and complete, and will fully convey the scope of the disclosure to those skilled in the art.

In the drawings, the shapes and dimensions of elements may be exaggerated for clarity, and the same reference numerals will be used throughout to designate the same or like elements.

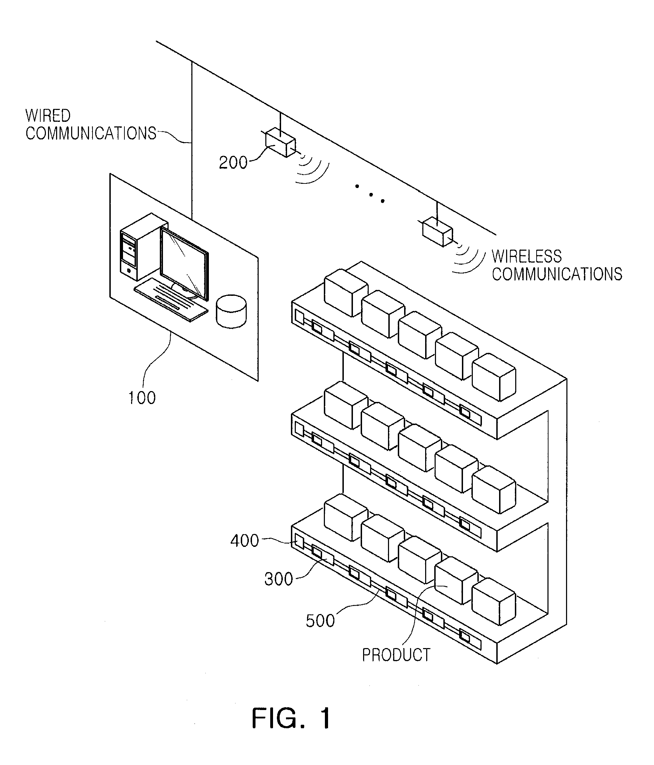

FIG. 1 is a block diagram of an electronic shelf label system according to an exemplary embodiment of the present disclosure.

Referring to FIG. 1, the electronic shelf label system according to the exemplary embodiment of the present disclosure may include an electronic shelf label server 100 (for example, an ESL server), a plurality of electronic shelf label gateways (for example, gateways) 200, and a plurality of electronic shelf label tags (for example, electronic tags) 300, and may further include a plurality of power supplies 400 supplying power to the plurality of electronic shelf label tags 300 and rails 500 on which the plurality of electronic shelf label tags 300 are installed.

The electronic shelf label server 100 may transmit product information including price information, and the like, to the plurality of electronic shelf label gateways 200 through a wired communications network (for example, Ethernet).

For example, in a case in which electronic shelf label tags 300 that need to update product information among the plurality of electronic shelf label tags 300 are present, the electronic shelf label server 100 may transmit updated product information to the plurality of electronic shelf label gateways 200.

Each of the plurality of electronic shelf label gateways 200 may perform wireless communications with the plurality of electronic shelf label tags 300.

For example, each of the plurality of electronic shelf label gateways 200 may transmit the product information received from the electronic shelf label server 100 to corresponding electronic shelf label tags 300.

Each of the plurality of electronic shelf label tags 300 may receive the product information from at least one of the plurality electronic shelf label gateways 200 and display the received product information.

For example, each of the plurality of electronic shelf label tags 300 may be in a sleep mode and be then periodically waken up to perform communications with at least one of the plurality of electronic shelf label gateways 200. Through this, each of the plurality of electronic shelf label tags 300 may receive and display the updated product information from at least one of the plurality electronic shelf label gateways 200 in a case in which the product information needs to be updated.

Each of the plurality of electronic shelf label tags 300 may be installed on the rails 500 positioned on front ends of shelves provided in a store in order to display product information on products, and the like, displayed in the store. For example, dozens of (for example, twenty or thirty) electronic shelf label tags 300 may be installed in each rail 500 provided in each shelf.

Each of the plurality of electronic shelf label tags 300 may receive required power from the power supplies 400 through power lines, or the like, provided in the rails 500 described above without including a separate battery, in order to perform the operation as described above.

Each of the plurality of power supplies 400 may be installed in the shelf for displaying the products, provided in the store, and may supply the power required for operating the plurality of electronic shelf label tags 300 installed on the corresponding shelf to the plurality of electronic shelf label tags 300.

The plurality of power supplies 400 may be installed in each shelf provided in the store or at least one power supply 400 may be installed in one or more shelf. In addition, a position on which the plurality of power supplies 400 is installed is not necessarily limited to the shelf.

The rails 500 may be installed on the front ends of the shelves provided in the store. The power lines through which the power supplies 400 are to supply the power to the plurality of electronic shelf label tags 300 installed on the rails 500 or communications lines for data communications may be installed in the rails 500.

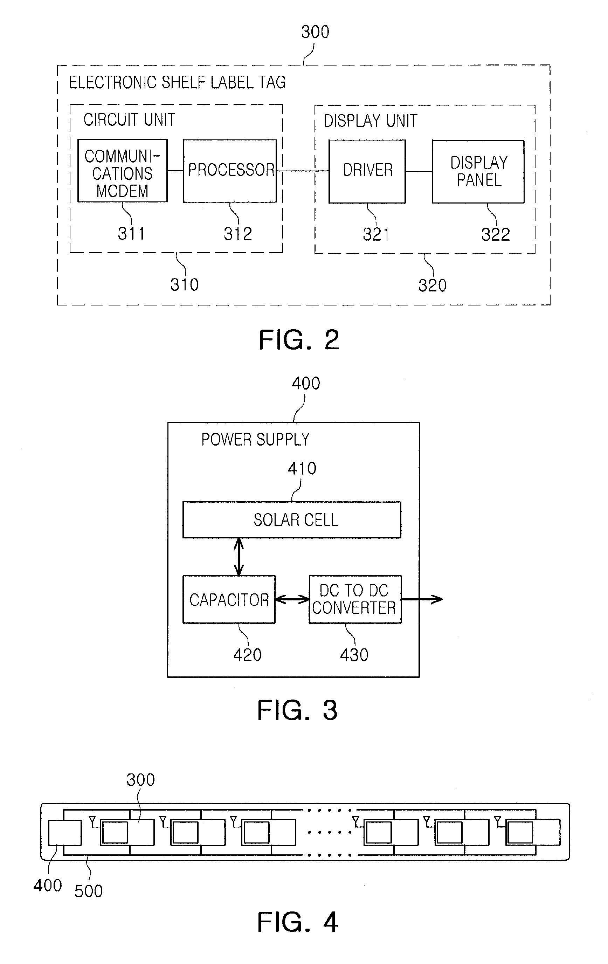

Next, an electronic shelf label tag 300 and a power supply 400 according to the exemplary embodiment of the present disclosure will be described in more detail with reference to FIGS. 2 through 9.

FIG. 2 is a block diagram of an electronic shelf label tag according to the exemplary embodiment of the present disclosure.

Referring to FIG. 2, the electronic shelf label tag 300 according to the exemplary embodiment of the present disclosure may mainly include a circuit unit 310 and a display unit 320.

The circuit unit 310, which is to perform data processing and communications for an operation of the electronic shelf label tag 300, may include a communications modem 311 and a processor 312. The circuit unit 310 may be implemented by, for example, a printed circuit board (PCB) assembly, or the like.

The communications modem 311, which is to perform communications with the plurality of electronic shelf label gateways 200, may be implemented by, for example, a radio frequency (RF) modem for wireless communications, or the like.

The processor 312 may process the product information received through the communications modem 311 and control the display unit 320 to display the processed product information. The processor 312 may include, for example, a central processing unit (CPU), a graphic processing unit (GPU), a microprocessor, an application specific integrated circuit (ASIC), a field programmable gate arrays (FPGA), or the like.

Meanwhile, the display unit 320, which is to display the product information received through the circuit unit 310, may include a driver 321 and a display panel 322.

The driver 321 may serve to drive the display panel 322 to display the product information, and may be implemented by, for example, a display integrated chip (IC) including a memory such as a display random access memory (RAM), a register, or the like.

The display panel 322, a region in which the display information is displayed, may be implemented by, for example, an electrophoretic display, a liquid crystal display (LCD), or the like.

In addition, the circuit unit 310 and the display unit 320 described above may be implemented to be coupled to or separated from each other by an interface pin, or the like, in terms of hardware, and may transmit and receive data through inter-integrated circuit (I2C) communications, serial peripheral interface (SPI) communications, or the like.

FIG. 3 is a block diagram of a power supply included in the electronic shelf label system according to the exemplary embodiment of the present disclosure.

Referring to FIG. 3, the power supply 400 included in the electronic shelf label system according to the exemplary embodiment of the present disclosure may include a solar cell 410, a capacitor 320, and a direct current (DC) to DC converter 430.

The solar cell 410 may be a device converting solar energy into electrical energy, and since a structure and a principle of the solar cell 410 have been well-known to those skilled in the art, a detailed description therefor will be omitted.

Since the solar cell 410 is provided in the power supply 400 separately separated from the electronic shelf label tags 300, it may be selected depending on a capacity required for driving the plurality of electronic shelf label tags 300 without having a limitation in a size thereof.

The capacitor 320, which is connected to the solar cell 410 to store electrical energy generated by the solar cell 410 therein, may be implemented by a super-capacitor having a high capacitance, such as an electric double layer capacitor (EDLC), or the like.

The DC to DC converter 430 may convert power stored in the capacitor 320 so that the power may be used in the plurality of electronic shelf label tags 300 and provide the converted power.

The power supplies 400 having the above-mentioned configuration may be installed in the shelves provided in the store, respectively, and may supply the power required for operating the plurality of electronic shelf label tags 300 installed on the corresponding shelves to the plurality of electronic shelf label tags 300.

FIG. 4 is a view illustrating an example in which the electronic shelf label tag and the power supply are installed on a rail of a shelf according to the exemplary embodiment of the present disclosure.

As illustrated in FIG. 4, the power supply 400 may be installed on one end of the shelf provided in the store, and the plurality of electronic shelf label tags 300 may be installed on the rail of the shelf. In addition, the power lines may be configured by, for example, a printed circuit board (PCB), or the like, on the rail.

The power supply 400 and the plurality of electronic shelf label tags 300 installed on the shelf may be connected to each other through the power lines on the rail, and the power supply 400 may supply the power required for driving the plurality of electronic shelf label tags 300 to the plurality of electronic shelf label tags 300 through the power lines.

Although a case in which the power supply 400 supplies the power to the plurality of electronic shelf label tags 300 through the power lines on the rail has been described in the above-mentioned exemplary embodiment, a scheme of supplying the power is not limited thereto.

For example, the power supply 400 and the plurality of electronic shelf label tags 300 may also include antennas for wireless charging and wirelessly supply the power, respectively.

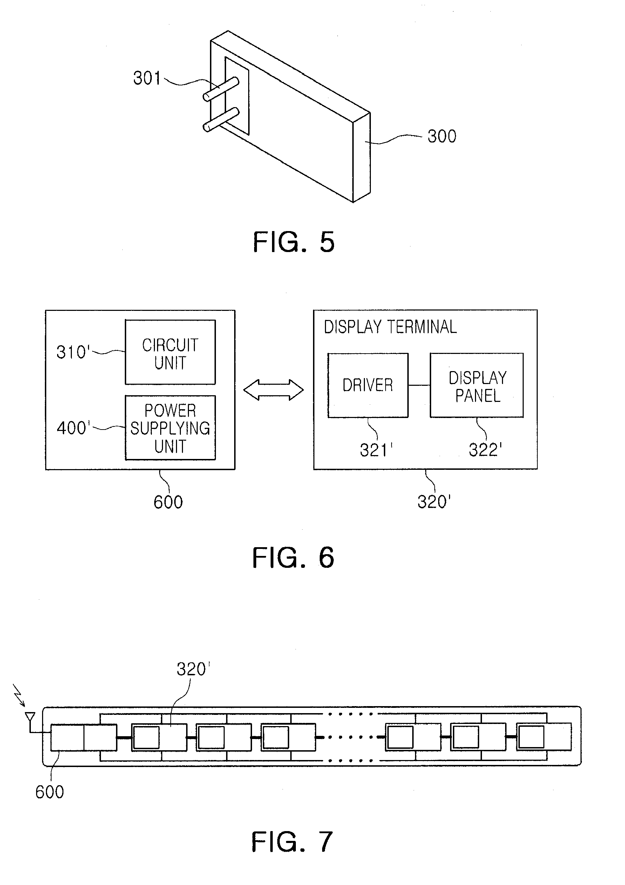

FIG. 5 is a view illustrating an implementation of a rear surface of the electronic shelf label tag illustrated in FIG. 4.

As illustrated in FIG. 5, the electronic shelf label tag 300 may include power terminals 301 formed on the rear surface thereof to thereby be implemented to contact the power lines on the rail.

In addition, the power terminals 301 may be formed on various positions such as an upper surface, a lower surface, a side surface, and the like, of the electronic shelf label tag 300 depending on a form in which the electronic shelf label tag 300 is installed on the rail as well as on the rear surface of the electronic shelf label tag 300.

FIG. 6 is a block diagram of a system in which a circuit unit of the electronic shelf label tag and the power supply are implemented to be integrated with each other according to the exemplary embodiment of the present disclosure.

According to the exemplary embodiment of the present disclosure, the circuit unit 310 may be implemented to be separately separated from the display unit 320 in the electronic shelf label tag 300 illustrated in FIG. 2 and be integrated with the power supply 400 illustrated in FIG. 3.

Referring to FIG. 6, a display terminal 320' may correspond to the display unit 320 illustrated in FIG. 2.

In addition, a control apparatus 600, which is implemented by integrating the circuit unit 310 illustrated in FIG. 2 and the power supply 400 illustrated in FIG. 3 with each other, may include a circuit unit 310' and a power supplying unit 400' each corresponding to the circuit unit 310 (See FIG. 2) and the power supply 400 (See FIG. 3).

In a case in which the system is implemented as illustrated in FIG. 6, respective display terminals 320' may be connected to the control apparatus 600 through the communications lines on the rail, and may display the product information depending on a control of the control apparatus 600.

In this case, the display terminal 320' does not need to perform RF communications with the electronic shelf label gateway in order to receive the product information, such that power for driving may be decreased as compared with the electronic shelf label tag 300 described with reference to FIG. 2 and a separate circuit unit does not need to be provided, whereby a device cost may be decreased.

In addition, since the control apparatus 600 performs wireless communications instead of a plurality of display terminals 320', a wireless transmission bandwidth may be more efficiently used.

FIG. 7 is a view illustrating an example in which the system illustrated in FIG. 6 is installed on the rail of the shelf.

As illustrated in FIG. 7, the control apparatus 600 may be installed on one end of the shelf provided in the store, and the plurality of display terminals 320' may be installed on the rail of the shelf. In addition, the power lines and the communications lines may be configured by, for example, a PCB, or the like, on the rail.

The control apparatus 600 and the plurality of display terminals 320' installed on the shelf may be connected to each other through the power lines and the communications lines on the rail, and the control apparatus 600 may supply the power to the plurality of display terminals 320' through the power lines and the communications lines.

In addition, in a case in which the product information displayed on the display terminals 320' connected to the control apparatus 600 needs to be updated, the control apparatus 600 may receive updated product information from the electronic shelf label gateway and transmit the updated product information to the corresponding display terminals 320' through the communications lines. In this case, a controller area network (CAN), an RS-485 protocol, or the like, may be used in order to transmit the product information.

In addition, in a case in which the product information displayed on the display terminals 320' does not need to be updated, the power supplying unit 400' may control a DC to DC converter provided therein to cut off the power provided to the display terminals 320'. Therefore, the power generated by the power supplying unit 400' may be more efficiently used.

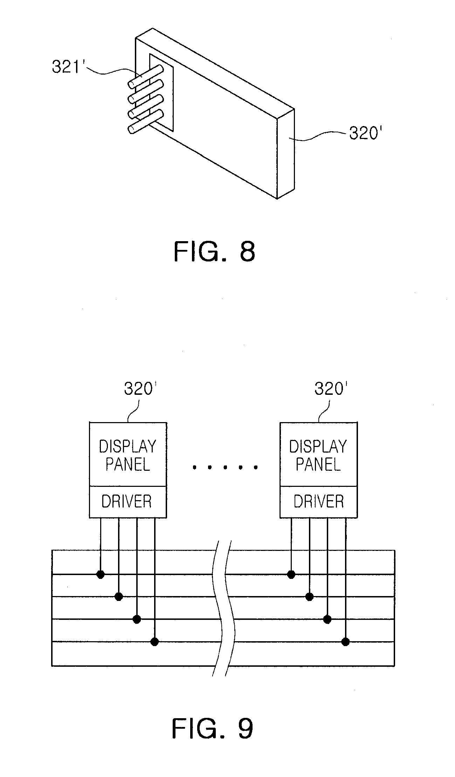

FIG. 8 is a view illustrating an implementation of a rear surface of a display panel illustrated in FIG. 7.

As illustrated in FIG. 8, the display panel 320' may include power and communications terminals 321' formed on the rear surface thereof to thereby be implemented to contact the power lines and the communications lines on the rail. However, a position of the power and communications terminals 320' is not necessarily limited to the rear surface of the display panel 320'.

FIG. 9 is a view illustrating an implementation of connection between the display panel illustrated in FIG. 7 and communications lines of the shelf.

Terminals in the display panel 320' configured as illustrated in FIG. 8 may contact power lines and communications lines configured on the rail, as illustrated in FIG. 9, to perform communications and power supplying between the display panel 320' and the control apparatus.

As set forth above, according to the exemplary embodiments of the present disclosure, the electronic shelf label tag that does not have a battery is implemented, whereby a limitation in a use period of the electronic shelf label tag depending on a battery capacity may be solved, and an electronic shelf label system that is more efficient may be provided.

While exemplary embodiments have been shown and described above, it will be apparent to those skilled in the art that modifications and variations could be made without departing from the scope of the present invention as defined by the appended claims.

## Claims

1. An electronic shelf label system comprising:
at least one power supply generating electrical energy using a solar cell and storing the generated electrical energy; and
at least one electronic shelf label tag driven by power supplied by the at least one power supply, receiving product information from an electronic shelf label gateway, and displaying the product information.

2. The electronic shelf label system of claim 1, wherein the at least one electronic shelf label tag is installed on a rail of a shelf for displaying products, and
the rail has power lines installed thereon in order for the at least one power supply to supply the power to the at least one electronic shelf label tag.

3. The electronic shelf label system of claim 1, wherein the at least one power supply and the at least one electronic shelf label tag include antennas for wireless charging, respectively, and
the at least one power supply wirelessly supplies the power to the at least one electronic shelf label tag.

4. The electronic shelf label system of claim 1, wherein the at least one electronic shelf label tag includes:
a circuit unit performing communications with the electronic shelf label gateway and processing the product information received from the electronic shelf label gateway; and
a display unit displaying the product information depending on a control of the circuit unit.

5. The electronic shelf label system of claim 1, wherein the at least one power supply includes:
the solar cell converting solar energy into the electrical energy;
a capacitor storing the electrical energy generated by the solar cell; and
a direct current (DC) to DC converter converting the electrical energy stored in the capacitor into a form usable in the at least one electronic shelf label tag and providing the converted electrical energy.

6. An electronic shelf label system comprising:
a control apparatus including a circuit unit performing communications with an electronic shelf label gateway and processing product information received from the electronic shelf label gateway and a power supplying unit generating electrical energy using a solar cell and storing the generated electrical energy; and
at least one display terminal driven by power supplied by the control apparatus and displaying the product information depending on a control of the control apparatus.

7. The electronic shelf label system of claim 6, wherein the at least one display terminal is installed on a rail of a shelf for displaying products, and
the rail has power lines and communication lines installed thereon in order to supply the power and transmit data between the control apparatus and the at least one display terminal.

8. The electronic shelf label system of claim 6, wherein the power supplying unit includes:
the solar cell converting solar energy into the electrical energy;
a capacitor storing the electrical energy generated by the solar cell; and
a DC to DC converter converting the electrical energy stored in the capacitor into a form usable in the at least one display terminal and providing the converted electrical energy.

9. The electronic shelf label system of claim 8, wherein the power supplying unit controls the DC to DC converter to cut off the power provided to the at least one display terminal when the product information does not need to be updated in the at least one display terminal.

10. The electronic shelf label system of claim 6, wherein when the product information displayed on the at least one display terminal needs to be updated, the circuit unit receives updated product information from the electronic shelf label gateway and transmits the updated product information to the at least one display terminal.

11. An electronic shelf label tag comprising:
a circuit unit performing communications with an electronic shelf label gateway and processing product information received from the electronic shelf label gateway; and
a display unit displaying the product information depending on a control of the circuit unit,
wherein the electronic shelf label tag is driven by power supplied by an external power supply.

12. The electronic shelf label tag of claim 11, wherein the electronic shelf label tag is installed on a rail of a shelf for displaying products and receives the power supplied by the external power supply through power lines installed on the rail.

13. The electronic shelf label tag of claim 11, further comprising an antenna for wireless charging, wherein the electronic shelf label tag wirelessly receives the power supplied by the external power supply.
